# EUROPÄISCHE PATENTSCHRIFT

(11) **EP 3 146 503 B1**
(45) Veröffentlichungstag und Bekanntmachung des Hinweises auf die Patenterteilung: **11.09.2019**
(21) Anmeldenummer: 15725544.9
(22) Anmeldetag: 18.05.2015
(51) Int. Cl.: G06T 7/11, G06T 7/12, G06T 7/136, G06T 7/187, G06K 9/00

(54) **VORRICHTUNG UND VERFAHREN ZUR AUTOMATISIERTEN ERFASSUNG VON BÄUMEN**
APPARATUS AND METHOD FOR THE AUTOMATED DETECTION OF TREES
DISPOSITIF ET PROCÉDÉ DE DÉTECTION AUTOMATIQUE D'ARBRES

(30) Priorität: 19.05.2014 DE 102014209405
(43) Veröffentlichungstag der Anmeldung: 29.03.2017
(73) Patentinhaber: Deutsches Zentrum für Luft- und Raumfahrt e.V., 51147 Köln (DE)
(72) Erfinder: SCHISCHMANOW, Adrian, 16540 Hohenneuendorf (DE); BÖRNER, Anko, 12489 Berlin (DE); ERNST, Ines, 12557 Berlin (DE); BAUER, Martin, 10117 Berlin (DE); BAUMBACH, Dirk, 99091 Erfurt (DE); BUDER, Maximilian, 16230 Melchow (DE); ZUEV, Sergey, 13088 Berlin (DE); FUNK, Eugen, 12347 Berlin (DE); GRIESSBACH, Denis, 10245 Berlin (DE); WOHLFEIL, Jürgen, 12359 Berlin (DE); MUND, Jan-Peter, 10559 Berlin (DE); LANZ, Michel, 65203 Wiesbaden (DE); THIELE, Tom, 13407 Berlin (DE); RITTER, Sebastian, 76761 Rülzheim (DE)
(74) Vertreter: Patentanwälte Bressel und Partner mbB
(86) Internationale Anmeldenummer: PCT/EP2015/060861
(87) Internationale Veröffentlichungsnummer: WO 2015/177079

(56) Entgegenhaltungen:
- DE-A1-102011 086 091
- JP-A- 2009 213 400
- ALEXANDER ZIEGLER ET AL: "Echtzeit und Embedded-Algorithmen und Sensorsystem für die dynamische Waldinventur", ALLGEMEINE VERMESSUNGS-NACHRICHTEN, Nr. 5, 1. Januar 2010 (2010-01-01), Seiten 182-189, XP055206302, in der Anmeldung erwähnt
- RENÉ KOCH ET AL: "Algorithmen und Messergebnisse bei der dynamischen Bestimmung von Baumparametern", PHOTOGRAMMETRIE - LASERSCANNING - OPTISCHE 3D-MESSTECHNIK; BEITRÄGE DER OLDENBURGER 3D-TAGE 2009, 2009, Seiten 217-226, XP009185677,
- MIKKO MIETTINEN ET AL: "New Measurment Concept for Forest Harvester Head", FIELD AND SERVICE ROBOTICS; RESULTS OF THE 7TH INTERNATIONAL CONFERENCE, 2010, Seiten 35-44, XP009185689,
- RALF REULKE AND NORBERT HAALA: "Tree Species Recognition with Fuzzy Texture Parameters", COMBINATORIAL IMAGE ANALYSIS. 10TH INTERNATIONAL WORKSHOP, IWCIA 2004. PROCEEDINGS IN: LECTURE NOTES IN COMPUTER SCIENCE VOL.3322,, Bd. 3322, 1. Januar 2004 (2004-01-01), Seiten 607-620, XP008100318, ISBN: 978-3-540-23942-0
- HIDE C ET AL: "Vision-Aided IMU for Handheld Pedestrian Navigation", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 September 2010 (2010-09-24), pages 534-541, XP056000465,
- CHEN JING ET AL: "Fusion of inertial and vision data for accurate tracking", FOURTH INTERNATIONAL CONFERENCE ON MACHINE VISION (ICMV 2011): MACHINE VISION, IMAGE PROCESSING, AND PATTERN ANALYSIS, SPIE, 1000 20TH ST. BELLINGHAM WA 98225-6705 USA, vol. 8349, no. 1, 24 December 2011 (2011-12-24), pages 1-8, XP060000000, DOI: 10.1117/12.920343 [retrieved on 2012-01-13]
- Zhiwen Xian ET AL: "Fusing Stereo Camera and Low-Cost Inertial Measurement Unit for Autonomous Navigation in a Tightly-Coupled Approach", JOURNAL OF NAVIGATION., vol. 68, no. 03, 16 December 2014 (2014-12-16), pages 434-452, XP055491573, GB ISSN: 0373-4633, DOI: 10.1017/S0373463314000848
- Wikipedia: "Inertial measurement unit", Wikipedia, 10 April 2014 (2014-04-10), XP055491710, Retrieved from the Internet: URL:https://en.wikipedia.org/w/index.php?t itle=Inertial_measurement_unit&oldid=60354 3288 [retrieved on 2018-07-11]

## Beschreibung

Die Erfindung betrifft eine Vorrichtung und ein Verfahren zur automatisierten Erfassung von Bäumen, insbesondere zur Inventur von Baumbeständen in Wäldern, Parks oder Baumschulen.

Insbesondere im Bereich der Waldwirtschaft ist eine automatisierte Erfassung von Bäumen wichtig, beispielsweise um neben der Inventur auch einen Harvester zu steuern. Dabei ist es bereits angedacht worden, dass diese Harvester autonom fahren, beispielsweise diese vollautomatisch vorab festgelegten Routen abfahren.

Die bisherigen Ansätze verwenden 2D-Laserscanner zur Erfassung. Ein Beispiel für ein solches System ist "Alexander Ziegler et al.; "Echtzeit und Embedded-Algorithmen und Sensorsystem für die dynamische Waldinventur; Allgemeine Vermessungs-Nachrichten AVN 5/2010, Seite 182 ff." beschrieben. Dabei wird neben dem 2D-Laserscanner eine digitale Kamera eingesetzt. Nachteilig an dem bekannten System mit 2D-Laserscannern ist, das die Harvester an jeweils festgelegten Orten abgestellt werden müssen (statische Messungen) oder aber sehr hohe Genauigkeitsanforderungen an ein Lagemesssystem gestellt werden müssen, um dynamisch zu messen, da sich die Lage des Harvesters während des Scan-Vorgangs stark ändern kann.

Aus der WO 2010/1 02840 A1 ist ein Verfahren zur Bestimmung eines Disparitätsbildes bzw. Stereobildes von mindestens zwei stereoskopisch (d.h. sich räumlich überlappenden) aufgenommenen Bildern bekannt.

Aus der DE 10 2011 086 091 A1 ist eine Vorrichtung zum mechanischen Ausdünnen von Blüten, insbesondere von Obstbäumen, bekannt, umfassend einen mechanischen Aktor, wobei die Vorrichtung mindestens einen optischen Detektor und eine Auswerteeinheit umfasst, wobei die Auswerteeinheit aus mindestens einer Aufnahme des optischen Detektors eine Blütendichte ermittelt, wobei der mechanische Aktor in Abhängigkeit der ermittelten Blütendichte angesteuert wird. Vorzugsweise umfasst die Vorrichtung eine Positionsbestimmungseinrichtung, wobei mittels des oder der optischen Detektoren mindestens zwei Aufnahmen zur Erzeugung eines Stereobildes aufgenommen werden. Aus dem Stereobild wird ein 3D-Modell berechnet und die 3D-Modellkoordinaten in 2D- oder 3D-Weltkoordinaten umgerechnet. Dabei werden in dem 3D-Modell Bereiche maskiert, die außerhalb eines vorgegebenen Abstandsbereiches liegen und/oder zum Horizont und/oder zum Bodenbereich gehören.

Der Erfindung liegt das technische Problem zugrunde, eine Vorrichtung zur automatisierten Erfassung von Bäumen zu schaffen sowie ein Verfahren zur automatisierten Erfassung von Bäumen zur Verfügung zu stellen, mittels derer einfacher eine dynamische Erfassung in Echtzeit erfolgen kann.

Die Lösung des technischen Problems ergibt sich durch die Vorrichtung mit den Merkmalen des Anspruchs 1 sowie das Verfahren mit den Merkmalen des Anspruchs 6. Weitere vorteilhafte Ausgestaltungen der Erfindung ergeben sich aus den Unteransprüchen.

Hierzu umfasst die Vorrichtung eine fahrbare Plattform, eine Kameraeinheit zur Erfassung von zwei räumlich überlappenden Bildern, wobei die Kameraeinheit auf der Plattform montiert ist, eine Lagesensorik zur Bestimmung der sechs Freiheitsgrade der Kameraeinheit und mindestens eine Auswerteeinheit, die derart ausgebildet ist, dass aus den zwei sich räumlich überlappenden Bildern ein 2D-Disparitätsbild erzeugt wird. In dem 2D-Disparitätsbild oder einem mit dem 2D-Disparitätsbild rektifizierten Bild der Kameraeinheit erfolgt dann eine Segmentierung von Bäumen, wobei die segmentierten Bäume mit den Daten der Lagesensorik als Datensatz in einem Weltkoordinatensystem abgespeichert werden. Dabei erfolgt die Erfassung der Bilder dynamisch in Echtzeit, wobei die nachfolgende Datenverarbeitung ebenfalls in Echtzeit erfolgen kann oder aber offline in einem Datenzentrum. Die beiden räumlich sich überlappenden Bilder können durch eine Monokamera aufgenommen werden, die zeitlich nacheinander eine Szene aus unterschiedlichen Blickwinkeln aufnimmt. Vorzugsweise wird jedoch eine Stereokamera verwendet, die weitgehend synchron die beiden Bilder aufnimmt. Die Ermittlung des 2D-Disparitätsbildes erfolgt beispielsweise mit einem Algorithmus wie er in der WO 2010/1202840 A1 beschrieben ist. Der Vorteil der passiven optischen Ermittlung der Daten gegenüber den aktiven 2D-Laserscannern ist, dass die Aufwendungen an die Lagegenauigkeit geringer sind, da zeitgleich die ganze Szene erfasst wird. Ein weiterer Vorteil ist, dass die Segmentierung in den 2D-Bildern (2D-Disparitätsbild oder rektifiziertes Bild) einfacher ist, als in den 3D-Punktwolken des 2D-Laserscanners. Vorzugsweise ist dabei die fahrbare Plattform derart ausgebildet, dass diese autonom fahren kann.

In der Alternative, wo die Segmentierung in den 2D-Disparitätsbildern erfolgt, werden vorzugsweise die segmentierten Bäume als Datensätze in einem Weltkoordinatensystem abgespeichert. Durch Wiederholung wird dann aus den verschiedenen Datensätzen eine 3D-Punktwolke erzeugt, in der Baumdaten aus verschiedenen Datensätzen fusioniert werden. Dies ist notwendig, da ein Baum mit leicht unterschiedlichen Koordinaten in mehreren Datensätzen auftauchen kann. Durch die Fusionierung werden diese verschiedenen Koordinaten zu einer Koordinate zusammengefasst.

In der alternativen Ausführungsform, wo die Segmentierung in dem rektifizierten Bild erfolgt, werden die segmentierten Daten vorzugsweise zu einer 3D-Punktwolke zusammengefasst und diese dann in ein Weltkoordinatensystem überführt und abgespeichert.

Erfindungsgemäß ist die Auswerteeinheit derart ausgebildet, dass in dem 2D-Disparitätsbild oder in der 3D-Punktwolke der Hintergrund und/oder Boden herausgefiltert wird. Bei der Segmentierung im 2D-Disparitätsbild erfolgt dies als Vorstufe vor der eigentlichen Segmentierung, was den nachfolgenden Segmentierungsprozess vereinfacht. Anschaulich werden Objekte ignoriert, die einen Abstand größer als einen Schwellwert aufweisen (z.B. 10-15 m), um so den Hintergrund zu entfernen. Des Weiteren können Objekte ignoriert werden, die zu dicht sind. Bildteile, in denen Bäume vermutet werden, können mit einem relativen Schwellwert aus einer Bildzeile herausgefiltert werden, was später noch näher erläutert wird. Der Boden kann beispielsweise mittels eines horizontalen Medianfilters extrahiert und herausgefiltert werden. Die eigentliche Segmentierung erfolgt dann mittels eines vertikalen Medianfilters.

In einer weiteren Ausführungsform wird zu den segmentierten Bäumen neben der Position mindestens ein weiterer Parameter erfasst und abgespeichert. Dabei kann der mindestens eine weitere Parameter der Durchmesser (Brusthöhendurchmesser) und/oder der Kronenansatz und/oder die Schaftlänge und/oder die Schaftform bzw. die Schaftformfunktion und/oder die Baumkrümmung und/oder die Baumgattung und/oder Vitalitätsmerkmale und/oder Volumendaten und/oder eine Verastung sein.

In einer weiteren Ausführungsform ist der Kameraeinheit mindestens ein Spektralfilter, beispielsweise ein NIR-Durchlassfilter, zugeordnet.

Erfindungsgemäß weist die Lagesensorik mindestens eine Inertial-Measurement-Unit, einen Neigungssensor und einen Empfänger eines Satelliten-Navigationssystems auf, wobei die Daten der Inertial-Measurement-Unit (IMU) durch den Neigungssensor und/oder die Bilddaten der Kameraeinheit gestützt werden. Dies ermöglicht eine hochgenaue Lagemessung trotz Drift der IMU.

In einer bevorzugten Ausführungsform ist die Vorrichtung als Harvester ausgebildet.

Die Erfindung wird nachfolgend anhand eines bevorzugten Ausführungsbeispiels näher erläutert. Die Figuren zeigen:
- Fig. 1: ein schematisches Blockschaltbild eines Teils einer Vorrichtung zur automatischen Erfassung von Bäumen,
- Fig. 2: ein Flussdiagramm eines ersten Verfahrens zur Segmentierung von Bäumen und
- Fig. 3: ein Flussdiagramm eines zweiten Verfahrens zur Segmentierung von Bäumen.

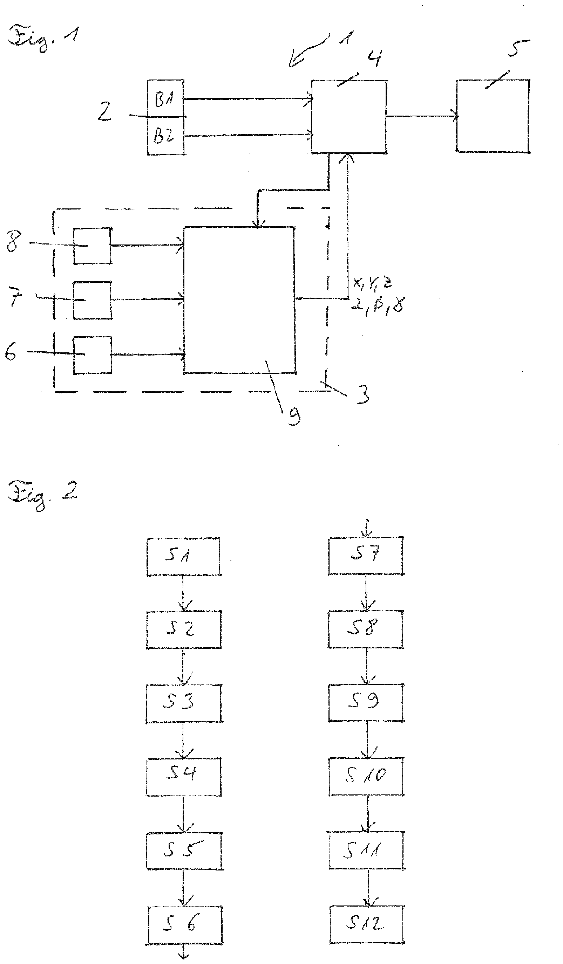

In der Fig. 1 ist ein Teil einer Vorrichtung 1 zur automatisierten Erfassung von Bäumen dargestellt. Die Vorrichtung 1 weist eine Kameraeinheit 2 in Form einer Stereokamera auf, die nahezu synchron zwei sich räumlich überlappende Bilder B1, B2 einer Szene aufnimmt. Des Weiteren weist die Vorrichtung 1 eine Lagesensorik 3, eine Auswerteeinheit 4 und einen Speicher 5 auf. Die Lagesensorik 3 weist eine Inertial-Measurement-Unit 6, einen Neigungssensor 7, einen DGPS-Empfänger 8 und einen Kalman-Filter 9 auf, wobei die Bilddaten B1, B2 der Kameraeinheit 2 zur Stützung der Daten der Inertial-Measurement-Unit 6 in den Kalman-Filter 9 eingehen. Dabei werden vorzugsweise die Bilddaten B1, B2 über die Auswerteeinheit 4 dem Kalman-Filter 9 zugeführt. Dies erlaubt eine spezielle Vorverarbeitung der Bilddaten für den Kalman-Filter 9, indem beispielsweise markante Punkte aus den Bilddaten ermittelt und dem Kalman-Filter 9 übergeben werden. Dabei sei angemerkt, dass prinzipiell auch nur die Bilddaten B1 oder nur die Bilddaten B2 zur Stützung ausreichend sind. Durch die Bilddaten B1, B2 kann die Drift der Inertial-Measurement-Unit 6 kompensiert werden. Als Ausgang des Kalman-Filters 9 stehen dann die drei translatorischen Freiheitsgrade X, Y, Z und die drei rotorischen Freiheitsgrade α, β, γ zur Verfügung. Die Vorrichtung 1 weist weiter eine nicht dargestellte fahrbare Plattform auf, sodass anhand der DGPS-Daten direkt oder über die X, Y, Z-Koordinaten eine Bahnkurve der Plattform ermittelbar ist. In der Auswerteeinheit 4 werden aus den Bilddaten B1, B2 die aufgenommenen Bäume segmentiert und die Kamerakoordinaten in Weltkoordinaten umgerechnet und schließlich die segmentierten Bäume in einem Weltkoordinatensystem im Speicher 5 abgespeichert. Dabei kann der komplette Auswertevorgang in Echtzeit auf der fahrbaren Plattform erfolgen oder aber ein Teil der Auswertung erfolgt in einer Zentrale in Echtzeit oder aber offline. Des Weiteren können die Daten der Auswerteeinheit 4 zur unmittelbaren Steuerung eines Aktors verwendet werden, insbesondere wenn die Vorrichtung 1 als Harvester ausgebildet ist.

Der Vorgang der Auswertung soll nun in einem ersten Verfahren anhand des Flussdiagramms in Fig. 2 näher erläutert werden. In einem ersten Schritt S1 werden die beiden Bilder B1, B2 durch die Kameraeinheit 2 aufgenommen und an die Auswerteeinheit 4 übermittelt. In einem zweiten Schritt S2 wird aus den zwei Bildern B1, B2 ein 2D-Disparitätsbild erzeugt. In einem dritten Schritt S3 wird der Hintergrund entfernt, indem beispielsweise Objekte größer als ein vorgegebener Abstand entfernt werden. Ist die Vorrichtung 1 als Harvester ausgebildet, so bewegt sich dieser in Rückegassen, die typischerweise 20 m auseinander liegen. Daher sind Objekte mit einer Entfernung größer 20 m nicht von Interesse und können aus der benachbarten Rückegasse aufgenommen werden. In einem vierten Schritt S4 werden anschließend Bildregionen, die nicht einem Baum zugeordnet werden können, entfernt. Hierzu wird eine ausreichend hohe Bildzeile im 2D-Disparitätsbild ausgewählt. Anschließend werden die Disparitäten in der ausgewählten Zeile für die jeweiligen Spalten mit den übrigen Bildteilen verglichen. Liegen die Disparitätswerte in einem relativen Bereich um die ausgewählte Zeile, wird ein Baum vermutet. Andernfalls wird die Bildregion für die Segmentierung ignoriert. Dabei bleiben im Bodenbereich noch Bereiche übrig, die mit einem Baum "verbunden" sind. In einem nachfolgenden Schritt S5 wird dann der Bodenbereich extrahiert und herausgefiltert. Hierzu wird ein horizontaler Medianfilter verwendet. Anschaulich ist dies beispielsweise ein Rechteck, das ein Vielfaches mehr Pixel breit als hoch ist. Dadurch werden breite Objekte gefunden, da bei schmalen Strukturen diese im Rechtreck unterbewertet sind. Diese breiten Strukturen können dann entfernt werden. In einem nachfolgenden Schritt S6 wird dann das derart gefilterte 2D-Disparitätsbild binärisiert. In einem nachfolgenden Schritt S7 werden anschließend vertikale Objekte (also insbesondere Baumstämme) mittels einem vertikalen Medianfilter detektiert. In einem Schritt S8 werden dann die detektierten Objekte ausgedehnt und die derart ausgedehnte binärisierte Maske auf das ursprüngliche 2D-Disparitätsbild angewendet (siehe S9). Das Ergebnis sind segmentierte, d.h. vereinzelte Bäume mit eindeutigem Pixelbezug. Anschließend werden in einem Schritt S10 die Kamerakoordinaten für die segmentierten Bäume in Weltkoordinaten umgerechnet, sodass über mehrere Aufnahmen eine 3D-Punktwolke entsteht. Da ein Baum in mehreren Aufnahmen vorkommen kann, die berechneten Koordinaten aber nicht exakt übereinstimmen, werden in einem Schritt S11 durch Mittelwertbildung die verschiedenen Koordinaten eines einzelnen Baumes zu einer einzigen Koordinate zusammengefasst. Als Ergebnis erhält man dann in Schritt S12 3D-Daten der vereinzelten Bäume in Weltkoordinaten.

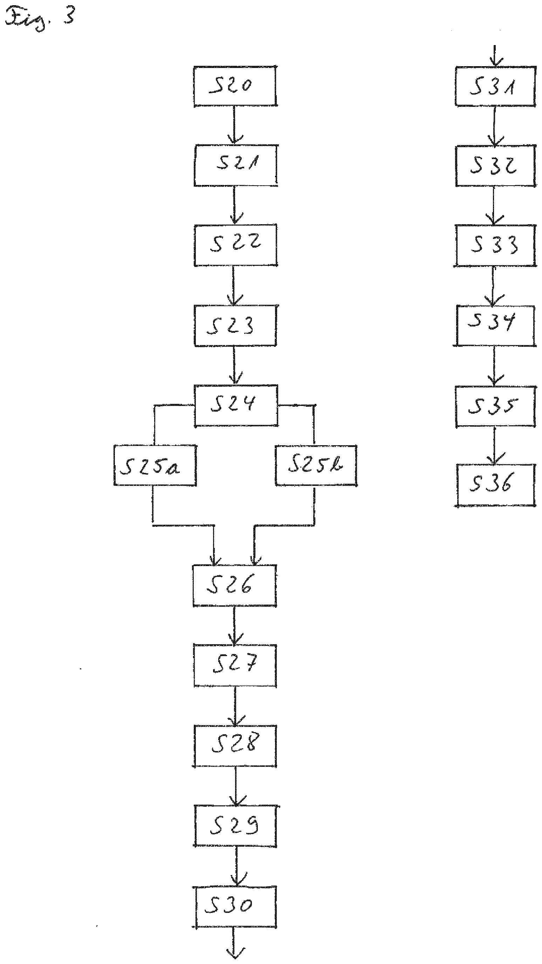

In der Fig. 3 ist ein alternatives Verfahren zu Segmentieren von Bäumen in Form eines Flussdiagramms dargestellt. Dabei werden in einem ersten Schritt S20 wieder die beiden Bilder B1, B2 mittels der Kameraeinheit 2 aufgenommen und daraus in einem nachfolgenden Schritt S21 ein 2D-Disparitätsbild erzeugt. Anschließend wird eines der Bilder B1 oder B2 mit dem 2D-Disparitätsbild in einem Schritt S22 rektifiziert und in einem Schritt 23 mittels eines Median-Filters geglättet.

Auf dieses geglättete Bild werden in Schritt 24 Kanten- und Kovarianz-Filter (z.B. ein Kalman-Filter) angewendet, wobei als Ergebnis in Schritt 25a ein Kantenbild in X- und ein Kantenbild in Y-Richtung vorliegen. Aus diesen beiden Kantenbildern können dann die Kantenwinkel (Richtungsvektoren) ermittelt werden. In einem Schritt S25b erhält man ein "class image" als Ergebnis der Kovarianz-Filterung. Dieses "class image" wird dann zeilenweise auf mehrere Merkmale untersucht, wie beispielsweise Disparität, erwartete Baumstammdicke und Kantenwinkel, wobei vorzugsweise alle drei Merkmale zur Anwendung kommen und für jedes Merkmal ein Schwellwert existiert, mit dem die Pixel des class image verglichen werden (Schritt S26).

Das Ergebnis der Merkmalsextraktion sind markierte Pixel, die linienförmige Kandidaten in X-Richtung entlang des möglichen Baumes/Baumstammes bilden. Dabei werden in einem Schritt S27 Pixelkandidaten entfernt. Hierzu wird beispielsweise ein Spalten-Histogramm und dessen Ableitung gebildet. Kandidaten, die nicht zwischen einer steigenden und fallenden Flanke der Ableitung liegen, werden dann verworfen.

Anschließend werden im Schritt S28 zusammengehörende Pixelkandidaten über ein geeignetes Verfahren, z.B. Region Growing, ermittelt. Das Verfahren wird auf das Bild (Kamera- und/oder Disparitätsbild) angewendet und darüber die Fläche bis zur Baumsilhouette vergrößert. Vorzugsweise existieren dabei Abbruchbedingungen wie beispielsweise Abstand zum nächsten Kandidaten oder Disparität und Grauwert.

In einem nächsten Schritt S29 wird dann die Kontur der Pixel geschlossen. Schließlich werden in einem Schritt S30 die segmentierten Bäume klassifiziert, wobei vorzugsweise ein Labeling stattfindet, d.h. zusammengehörige Pixel werden zusammengefasst.

Im Schritt S31 werden zur Bildung einer 3D-Punktewolke alle 3D-Punkte entsprechend der Ergebnisse aus der 2D-Segmentierung über alle Bildaufnahmezeitpunkte gespeichert. Im Schritt S32 werden Ausreißer mittels eines K-NN-Algorithmus (k nächster Nachbar-Algorithmus) entfernt. In einem Schritt S33 wird beispielsweise mittels eines Ransac-Algorithmus die Bodenplatte und bodennahes Buschwerk entfernt.

Anschließend wird das 3D-Objekt im Schritt S34 klassifiziert (Stamm, Krone), wobei eine Zuordnung von 3D-Punkten zu 3D-Objekten mittels Graph-Clustering über Filtermerkmale aus der 2D-Segmentierung und dem Punktabstand erfolgt.

Schließlich werden in einem Schritt S35 die 3D-Punkte in ein Weltkoordinatensystem überführt und im Schritt S36 die Position für jeden Baum anhand der verorteten und gelabelten 3D-Punkte bestimmt.

Mittels dieses Ansatzes können zusätzlich Kronenansatz, Schaftlänge und die Baumkrümmung bestimmt werden. Des Weiteren kann beispielsweise über Texturanalysen eine Erfassung der Baumgattung erfolgen. Über räumliche und/oder spektrale Texturen können auch Vitalitätsmerkmale der segmentierten Bäume bestimmt werden. Abschließend sei angemerkt, dass die Bestimmung des Durchmessers vorzugsweise über mehrere Zeilen erfolgen, wobei der resultierende Durchmesser durch einen Mittelwert oder einen Median über die Zeilen erfolgt.

## Patentansprüche

1. Vorrichtung (1) zur automatisierten Erfassung von Bäumen, umfassend eine fahrbare Plattform, eine Kameraeinheit (2) zur Erfassung von zwei räumlich überlappenden Bildern (B1, B2), wobei die Kameraeinheit (2) auf der Plattform montiert ist, eine Lagesensorik (3) zur Bestimmung der sechs Freiheitsgrade (X, Y, Z, α, β, γ) der Kameraeinheit (2) und mindestens eine Auswerteeinheit (4), wobei die Auswerteeinheit (4) derart ausgebildet ist, dass aus den zwei sich räumlich überlappenden Bildern (B1, B2) ein 2D-Disparitätsbild erzeugt wird, wobei in dem 2D-Disparitätsbild der Hintergrund entfernt wird, wobei die Auswerteeinheit (4) weiter derart ausgebildet ist, dass in dem 2D-Disparitätsbild eine Segmentierung von Bäumen erfolgt, wobei die segmentierten Bäume mit den Daten der Lagesensorik (3) als Datensatz in einem Weltkoordinatensystem abgespeichert werden,
**dadurch gekennzeichnet, dass**
die Lagesensorik (3) mindestens eine Inertial-Measurement-Unit (6), einen separaten Neigungssensor (7) und einen Empfänger eines Satelliten-Navigationssystems aufweist, wobei die Daten der Inertial-Measurement-Unit (6) durch den Neigungssensor und/oder die Bilddaten der Kameraeinheit (2) gestützt werden, wobei die Auswerteeinheit (4) weiter derart ausgebildet ist, dass nach dem Entfernen des Hintergrundes Bildbereiche entfernt werden, die nicht einem Baum zugeordnet werden können, wozu eine ausreichend hohe Bildzeile im 2D-Disparitätsbild ausgewählt wird, wobei anschließend die Disparitäten in der ausgewählten Zeile für die jeweiligen Spalten mit den übrigen Bildteilen verglichen werden, wobei ein Baum vermutet wird, wenn die Disparitätswerte in einem relativen Bereich um die ausgewählte Zeile liegen, wobei andernfalls die Bildregion für die nachfolgende Segmentierung ignoriert wird, wobei vor der Segmentierung noch der Bodenbereich mittels eines horizontalen Medianfilters extrahiert und herausgefiltert wird, wobei das derart gefilterte 2D-Disparitätsbild binarisiert wird und anschließend mittels einem vertikalen Medianfilter vertikale Objekte detektiert werden, wobei die detektierten Objekte ausgedehnt werden und die derart ausgedehnte binarisierte Maske auf das ursprüngliche 2D-Disparitätsbild angewendet wird, sodass dann als Zwischenergebnis segmentierte Bäume mit eindeutigem Pixelbezug vorliegen, die dann in das Weltkoordinatensystem umgerechnet werden, wobei durch eine Mittelwertbildung die verschiedenen Koordinaten eines einzelnen Baumes aus mehreren Aufnahmen zu einer einzigen Koordinate zusammengefasst werden.

2. Vorrichtung nach Anspruch 1, **dadurch gekennzeichnet, dass** die Auswerteeinheit (4) derart ausgebildet ist, dass zu den segmentierten Bäumen neben der Position mindestens ein weiterer Parameter erfasst und abgespeichert wird.

3. Vorrichtung nach Anspruch 2, **dadurch gekennzeichnet, dass** der mindestens eine weitere Parameter der Durchmesser und/oder der Kronenansatz und/oder die Schaftlänge und/oder die Baumkrümmung und/oder die Baumgattung und/oder Vitalitätsmerkmale und/oder Volumendaten und/oder eine Verastung ist.

4. Vorrichtung nach einem der vorangegangenen Ansprüche, **dadurch gekennzeichnet, dass** der Kameraeinheit (2) mindestens ein Spektralfilter zugeordnet ist.

5. Vorrichtung nach einem der vorangegangenen Ansprüche, **dadurch gekennzeichnet, dass** die Vorrichtung (1) als Harvester ausgebildet ist.

6. Verfahren zur automatisierten Erfassung von Bäumen, mittels einer fahrbaren Plattform, einer Kameraeinheit (2) zur Erfassung von zwei sich räumlich überlappenden Bildern (B1, B2), wobei die Kameraeinheit (2) auf der Plattform montiert ist, einer Lagesensorik (3) zur Erfassung der sechs Freiheitsgrade (X, Y, Z, α, β, γ) der Kameraeinheit (2) und mindestens einer Auswerteeinheit (4), wobei in der Auswerteeinheit (4) aus den zwei sich überlappenden Bildern (B1, B2) ein 2D-Disparitätsbild erzeugt wird, wobei in dem 2D-Disparitätsbild der Hintergrund entfernt wird, wobei in dem 2D-Disparitätsbild eine Segmentierung von Bäumen erfolgt, wobei die segmentierten Bäume mit den Daten der Lagesensorik (3) als Datensatz in einem Weltkoordinatensystem abgespeichert werden,
**dadurch gekennzeichnet, dass**
die Lagesensorik (3) mindestens eine Inertial-Measurement-Unit (6), einen separatenNeigungssensor (7) und einen Empfänger eines Satelliten-Navigationssystems aufweist, wobei die Daten der Inertial-Measurement-Unit (6) durch den Neigungssensor und/oder die Bilddaten der Kameraeinheit (2) gestützt werden, wobei die Auswerteeinheit (4) weiter derart ausgebildet ist, dass nach dem Entfernen des Hintergrundes Bildbereiche entfernt werden, die nicht einem Baum zugeordnet werden können, wozu eine ausreichend hohe Bildzeile im 2D-Disparitätsbild ausgewählt wird, wobei anschließend die Disparitäten in der ausgewählten Zeile für die jeweiligen Spalten mit den übrigen Bildteilen verglichen werden, wobei ein Baum vermutet wird, wenn die Disparitätswerte in einem relativen Bereich um die ausgewählte Zeile liegen, wobei andernfalls die Bildregion für die nachfolgende Segmentierung ignoriert wird, wobei vor der Segmentierung noch der Bodenbereich mittels eines horizontalen Medianfilters extrahiert und herausgefiltert wird, wobei das derart gefilterte 2D-Disparitätsbild binarisiert wird und anschließend mittels einem vertikalen Medianfilter vertikale Objekte detektiert werden, wobei die detektierten Objekte ausgedehnt werden und die derart ausgedehnte binarisierte Maske auf das ursprüngliche 2D-Disparitätsbild angewendet wird, sodass dann als Zwischenergebnis segmentierte Bäume mit eindeutigem Pixelbezug vorliegen, die dann in das Weltkoordinatensystem umgerechnet werden, wobei durch eine Mittelwertbildung die verschiedenen Koordinaten eines einzelnen Baumes aus mehreren Aufnahmen zu einer einzigen Koordinate zusammengefasst werden.

## Claims

1. Apparatus (1) for the automated detection of trees, comprising a movable platform, a camera unit (2) for capturing two spatially overlapping images (B1, B2), wherein the camera unit (2) is mounted on the platform, a position sensor system (3) for determining the six degrees of freedom (X, Y, Z, α, β, γ) of the camera unit (2) and at least one evaluation unit (4), wherein the evaluation unit (4) is designed such that a 2D disparity image is produced from the two spatially overlapping images (B1, B2), wherein the background is removed from the 2D disparity image, wherein the evaluation unit (4) is further designed such that segmentation of trees is effected in the 2D disparity image, wherein the segmented trees are stored with the data of the position sensor system (3) as a data record in a world coordinate system,
**characterized in that**
the position sensor system (3) has at least one inertial measurement unit (6), a separate inclination sensor (7) and a receiver of a satellite navigation system, wherein the data of the inertial measurement unit (6) are backed up by the inclination sensor and/or the image data of the camera unit (2), wherein the evaluation unit (4) is further designed such that, after the removal of the background, image areas that cannot be associated with a tree are removed, to which end a sufficiently high image row in the 2D disparity image is selected, wherein subsequently the disparities in the selected row are compared with the remaining image portions for the respective columns, wherein a tree is suspected if the disparity values are in a relative range around the selected row, wherein otherwise the image region is ignored for the subsequent segmentation, wherein, before the segmentation, the ground area is extracted and filtered out by means of a horizontal median filter, wherein the 2D disparity image filtered in this manner is binarized and subsequently a vertical median filter is used to detect vertical objects, wherein the detected objects are expanded and the binarized mask expanded in this manner is applied to the original 2D disparity image, so that the interim result then obtained is segmented trees having a unique pixel reference that are then converted into the world coordinate system, wherein averaging combines the various coordinates of a single tree from multiple shots to produce a single coordinate.

2. Apparatus according to Claim 1, **characterized in that** the evaluation unit (4) is designed such that at least one further parameter besides the position is captured for the segmented trees and stored.

3. Apparatus according to Claim 2, **characterized in that** the at least one further parameter is the diameter and/or the crown base and/or the trunk length and/or the tree curvature and/or the tree type and/or vitality features and/or volume data and/or branching.

4. Apparatus according to one of the preceding claims, **characterized in that** the camera unit (2) has at least one associated spectral filter.

5. Apparatus according to one of the preceding claims, **characterized in that** the apparatus (1) is in the form of a harvester.

6. Method for the automated detection of trees, by means of a movable platform, a camera unit (2) for capturing two spatially overlapping images (B1, B2), wherein the camera unit (2) is mounted on the platform, a position sensor system (3) for capturing the six degrees of freedom (X, Y, Z, α, β, γ) of the camera unit (2) and at least one evaluation unit (4), wherein a 2D disparity image is produced from the two overlapping images (B1, B2) in the evaluation unit (4), wherein the background is removed from the 2D disparity image, wherein segmentation of trees is effected in the 2D disparity image, wherein the segmented trees are stored with the data of the position sensor system (3) as a data record in a world coordinate system,
**characterized in that**
the position sensor system (3) has at least one inertial measurement unit (6), a separate inclination sensor (7) and a receiver of a satellite navigation system, wherein the data of the inertial measurement unit (6) are backed up by the inclination sensor and/or the image data of the camera unit (2), wherein the evaluation unit (4) is further designed such that, after the removal of the background, image areas that cannot be associated with a tree are removed, to which end a sufficiently high image row in the 2D disparity image is selected, wherein subsequently the disparities in the selected row are compared with the remaining image portions for the respective columns, wherein a tree is suspected if the disparity values are in a relative range around the selected row, wherein otherwise the image region is ignored for the subsequent segmentation, wherein, before the segmentation, the ground area is extracted and filtered out by means of a horizontal median filter, wherein the 2D disparity image filtered in this manner is binarized and subsequently a vertical median filter is used to detect vertical objects, wherein the detected objects are expanded and the binarized mask expanded in this manner is applied to the original 2D disparity image, so that the interim result then obtained is segmented trees having a unique pixel reference that are then converted into the world coordinate system, wherein averaging combines the various coordinates of a single tree from multiple shots to produce a single coordinate.

## Revendications

1. Dispositif (1) pour la détection automatisée d'arbres, comprenant une plate-forme mobile, une unité à caméra (2) destinée à acquérir deux images (B1, B2) qui se chevauchent dans l'espace, l'unité à caméra (2) étant montée sur la plate-forme, un système de détection de position (3) destiné à déterminer les six degrés de liberté (X, Y, Z, α, β, γ) de l'unité à caméra (2) et au moins une unité d'interprétation (4), l'unité d'interprétation (4) étant configurée de telle sorte qu'une image de disparité 2D est générée à partir des deux images (B1, B2) qui se chevauchent dans l'espace, l'arrière-plan étant supprimé dans l'image de disparité 2D, l'unité d'interprétation (4) étant en outre configurée de telle sorte qu'une segmentation d'arbres est effectuée dans l'image de disparité 2D, les arbres segmentés étant mémorisés avec les données du système de détection de position (3) sous la forme d'un jeu de données dans un système de coordonnées tridimensionnel,
**caractérisé en ce que**
le système de détection de position (3) possède au moins une unité de mesure inertielle (6), un capteur d'inclinaison (7) séparé et un récepteur d'un système de navigation par satellite, les données de l'unité de mesure inertielle (6) étant étayées par le capteur d'inclinaison et/ou les données d'image de l'unité à caméra (2), l'unité d'interprétation (4) étant en outre configurée de telle sorte qu'après la suppression de l'arrière-plan, des zones d'image qui ne peuvent pas être associées à un arbre sont supprimées, une ligne d'image suffisamment haute étant sélectionnée à cet effet dans l'image de disparité 2D, les disparités dans la ligne sélectionnée pour les colonnes respectives étant ensuite comparées avec les autres parties d'image, un arbre étant supposé lorsque les valeurs de disparité dans une zone relative se trouvent autour de la ligne sélectionnée, dans le cas contraire la région d'image étant ignorée pour la segmentation suivante, la zone du sol étant encore extraite et supprimée par filtrage au moyen d'un filtre médian horizontal avant la segmentation, l'image de disparité 2D ainsi filtrée étant binarisée et les objets verticaux étant ensuite détectés au moyen d'un filtre médian vertical, des objets détectés étant allongés et le masque binarisé ainsi allongé étant appliqué sur l'image de disparité 2D originelle de sorte que des arbres segmentés avec une référence de pixel univoque sont alors obtenus en tant que résultat intermédiaire, lesquels sont ensuite convertis dans le système de coordonnées tridimensionnel, les différentes coordonnées d'un arbre individuel issues de plusieurs enregistrements étant regroupées en une coordonnée unique par un calcul de valeur moyenne.

2. Dispositif selon la revendication 1, **caractérisé en ce que** l'unité d'interprétation (4) est configurée de telle sorte qu'au moins un paramètre supplémentaire est détecté et mémorisé en plus de la position à propos des arbres segmentés.

3. Dispositif selon la revendication 2, **caractérisé en ce que** l'au moins un paramètre supplémentaire est le diamètre et/ou la base du houppier et/ou la longueur de tige et/ou la courbure d'arbre et/ou le genre d'arbre et/ou des caractéristiques de vitalité et/ou des données de volume et/ou une ramification.

4. Dispositif selon l'une des revendications précédentes, **caractérisé en ce qu'**au moins un filtre spectral est associé à l'unité à caméra (2).

5. Dispositif selon l'une des revendications précédentes, **caractérisé en ce que** le dispositif (1) est réalisé sous la forme d'une abatteuse.

6. Procédé de détection automatisée d'arbres, au moyen d'une plate-forme mobile, d'une unité à caméra (2) destinée à acquérir deux images (B1, B2) qui se chevauchent dans l'espace, l'unité à caméra (2) étant montée sur la plate-forme, d'un système de détection de position (3) destiné à acquérir les six degrés de liberté (X, Y, Z, α, β, γ) de l'unité à caméra (2) et d'au moins une unité d'interprétation (4), une image de disparité 2D étant générée dans l'unité d'interprétation (4) à partir des deux images (B1, B2) qui se chevauchent dans l'espace, l'arrière-plan étant supprimé dans l'image de disparité 2D, une segmentation d'arbres étant effectuée dans l'image de disparité 2D, les arbres segmentés étant mémorisés avec les données du système de détection de position (3) sous la forme d'un jeu de données dans un système de coordonnées tridimensionnel,
**caractérisé en ce que**
le système de détection de position (3) possède au moins une unité de mesure inertielle (6), un capteur d'inclinaison (7) séparé et un récepteur d'un système de navigation par satellite, les données de l'unité de mesure inertielle (6) étant étayées par le capteur d'inclinaison et/ou les données d'image de l'unité à caméra (2), l'unité d'interprétation (4) étant en outre configurée de telle sorte qu'après la suppression de l'arrière-plan, des zones d'image qui ne peuvent pas être associées à un arbre sont supprimées, une ligne d'image suffisamment haute étant sélectionnée à cet effet dans l'image de disparité 2D, les disparités dans la ligne sélectionnée pour les colonnes respectives étant ensuite comparées avec les autres parties d'image, un arbre étant supposé lorsque les valeurs de disparité dans une zone relative se trouvent autour de la ligne sélectionnée, dans le cas contraire la région d'image étant ignorée pour la segmentation suivante, la zone du sol étant encore extraite et supprimée par filtrage au moyen d'un filtre médian horizontal avant la segmentation, l'image de disparité 2D ainsi filtrée étant binarisée et des objets verticaux étant ensuite détectés au moyen d'un filtre médian vertical, les objets détectés étant allongés et le masque binarisé ainsi allongé étant appliqué sur l'image de disparité 2D originelle de sorte que des arbres segmentés avec une référence de pixel univoque sont alors obtenus en tant que résultat intermédiaire, lesquels sont ensuite convertis dans le système de coordonnées tridimensionnel, les différentes coordonnées d'un arbre individuel issues de plusieurs enregistrements étant regroupées en une coordonnée unique par un calcul de valeur moyenne.
